# EUROPÄISCHE PATENTANMELDUNG

(11) **EP 0 870 478 A1**
(43) Veröffentlichungstag der Anmeldung: **14.10.1998**
(21) Anmeldenummer: 97105930.8
(22) Anmeldetag: 10.04.1997
(51) Int. Cl.: A61C 5/00, A61C 8/00, A61C 7/14

(54) **Dentalretentionselement aus hochfester Keramik**

(71) Anmelder: Neumeyer, Stefan Dr., D-93458 Eschlkam (DE)
(72) Erfinder: Neumeyer, Stefan Dr., D-93458 Eschlkam (DE)
(74) Vertreter: Wasmeier, Alfons, Dipl.-Ing.

(57) **Zusammenfassung**

Ein Dental-Retentionsstift oder Dental-Retentionselement aus hochfester Keramik, z.B. aus Zirkonoxid, für den Einsatz in eine Bohrung einer Zahnwurzel oder eines Zahnrestes bzw. eines zu restaurierenden Zahnes weist einen Überzug aus fester, aber chemisch und/oder physikalisch und/oder mechanisch leicht strukturierbarer Keramik auf.

## Beschreibung

Die Erfindung betrifft Dentalretentionsstifte nach dem Oberbegriff des Anspruches 1 sowie Dentalretentionshülsen oder -kappen nach dem Oberbegriff des Anspruches 2.

Seit kurzem sind Dentalretentionsstifte aus hochfester Keramik, und zwar z.B. aus Zirkonoxid, auf dem Markt, die eine außergewöhnlich hohe mechanische Festigkeit haben. Derartige Stifte werden zum Sanieren von kranken oder beschädigten Zähnen verwendet, deren Zahnwurzel eine Bohrung erhält, in die ein Teil des Stiftes eingesetzt wird. Der andere Teil des Stiftes steht aus der Zahnbohrung bzw. dem Zahnstumpf vor und dient als Gerüst zur Aufnahme eines Zahnaufbaues, beispielsweise einer Krone, oder kann zur Stabilisierung der verbliebenen Zahnhartsubstanz dienen.

Ein entscheidender Nachteil dieser hochfesten Keramikstifte ist darin zu sehen, daß aufgrund der außerordentlichen Härte und chemischen Festigkeit des Materials die Stiftoberfläche extrem schwierig zu bearbeiten ist, so daß Verbundprobleme beim Verbinden mit der Zahnwurzel wie auch dem Aufbau bzw. der Krone auftreten können, und auch eine individuelle Anpassung des Stiftes und der Stiftoberfläche an die jeweiligen Bedingungen des Einzelfalles durch den Zahnarzt nicht oder nur mit erheblichen Anstrengungen und nur in begrenztem Umfang möglich ist. Eine vergleichbare Situation besteht für hochfeste keramische Aufbauelemente auf Implantaten.

Aufgabe der Erfindung ist es, gattungsgemäße Dentalelemente, nämlich Retentionsstifte als auch Retentionshülsen oder - kappen, aus hochfester Keramik so zu verbessern, daß die Verbundprobleme beim Einsatz dieser Elemente ausgeschaltet werden können und daß eine Bearbeitung der Elementoberfläche auf einfachem Wege möglich ist.

Gemäß der Erfindung wird dies mit den Merkmalen des Kennzeichens des Anspruches 1 sowie des Kennzeichens des Anspruches 2 erreicht. Weitere Ausgestaltungen der Erfindung sind Gegenstand der Unteransprüche.

Das Dentalretentionselement nach der Erfindung besteht aus einem hochfesten Kern, z.B. aus Zirkonoxid, und einer über einen chemischen und/oder mechanischen Verbund mit dem Kern verbundenen Dentalkeramikschicht, die chemisch und/oder mechanisch je nach den Vorgaben des Zahnarztes für den jeweiligen Anwendungsfall auf einfache Weise zu bearbeiten ist. Dieser Überzug aus Dentalkeramik wird z.B. durch Ätzen, etwa mit Flußsäure, durch mechanisches Aufrauhen oder Sandstrahlen, durch Aufsputtern entsprechend hochreiner Keramikpartikel, durch Laser-Abtragverfahren, durch Ultraschallbehandelung oder dergl. Bearbeitungsvorgänge soweit wie erforderlich aufgerauht oder in der Form bearbeitet, damit über eine auf die Außenseite dieser Schicht aufgebrachte Haftvermittlerschicht eine hochfeste Verbindung mit der Innenfläche der Bohrung in der Zahnwurzel und mit der aufgesetzten Krone oder dgl. erzielt werden kann. Zur Erleichterung der chemischen und/oder physikalischen und/oder mechanischen Behandlung der Oberfläche der hochfesten Keramikelemente wird des weiteren eine gezielte 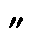 Verunreini-gung" der Oberfläche vorgenommen, die einen verbesserten Verbund bzw. eine verbesserte Verankerung ergeben. Diese 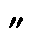 Verunreinigungen" sind beispielsweise als eingeschmolzene bzw. ausgebrannte Keramikfremdkörper, als Metalloxidverunreinigungen mit gezielten Gefüge-Strukturveränderungen der Keramik oder dergl. ausgebildet. Die Tiefe der Verunreinigungsschicht wird so gewählt, daß sie entsprechend der Festigkeit und/oder der Ausgestaltung des keramischen Überzuges eine möglichst große Variationsbreite der Handhabung bei gleichzeitiger hoher Stabilität bzw. Verbundfestigkeit ergibt. Zur weiteren Vereinfachung und Verbesserung der bisher bestehenden Probleme werden zusätzliche Verfahren und Modifikationen vorgeschlagen, die die Bearbeitung und Verbundqualität beeinflussen und der notwendigen Individualität Rechnung tragen.

Das Material der Dentalkeramikschicht, z.B. 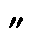 Vitadur" für vollkeramische Brückenversorgungen, 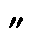 Cerasiv" der Fa. Brasseler für Hülsen oder Kappen, oder 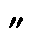 Alumina" und 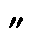 Spinell"-Materialien der Firma Vita werden dabei vorzugsweise auf den Stift bzw. die Hülse in der Form aufgebracht, daß sie später eine individuelle Formgebung der zu restaurierenden Zahnregion erleichtern. Das Material der Dentalkeramik wird vorzugsweise in bezug auf den Wärmeausdehnungskoeffizienten so gewählt, daß ein homogener, hochfester Überzug erreicht wird. Parallel dazu wird durch dieses Verfahren die Handhabung für den Zahnarzt wesentlich vereinfacht und verbessert, und ein hochqualitativer, belastbarer Verbund gesichert. Die eigentliche Einpassung und das Einproben in den Zahn bzw. auf das Implantat ist im Mundmilieu unproblematisch, da die Keramik-Außenbeschichtung chemisch und mechanisch sehr inert ist und so eine exakte Formpassung, die ebenfalls einen sehr großen Einfluß auf die Verbundfestigkeit hat, leicht zu überprüfen ist. In selektiv einfacher Weise, z.B. durch Ätzen mit Fluorsäure, läßt sich dann die bakterielle und mit Proteinen, Glykoproteinen etc. kontaminierte Keramikoberfläche reinigen und in einen hochaktiven und sehr gut benetzbaren Zustand überführen, der einen optimalen mechanischen und/oder chemischen und/oder physikalisch-chemischen Verbund gewährleistet. Im Falle der Verwendung derartiger hochfester Dentalelemente für Hülsen oder Kappen werden letztere auf das Implantat aufgeklebt oder aufgeschraubt; die Hülse kann geschlossen oder offen sein und ist in der Regel zylindrisch ausgebildet.

Nachstehend wird die Erfindung in Verbindung mit der Zeichnung anhand von Ausführungsbeispieles erläutert. Es zeigt:
- Fig. 1: einen Dentalstift aus Zirkonoxid mit einem Keramik-Überzug,
- Fig. 2: einen Ausschnitt aus der Darstellung nach Fig. 1,
- Fig. 3: eine abgeänderte Ausführungsform der Darstellung nach Fig. 2,
- Fig. 4: eine weitere abgeänderte Ausführungsform der Darstellung nach Fig. 2,
- Fig. 5: den Dentalstift mit Keramik-Überzug in Verbindung mit einem zu restaurierenden Zahn,
- Fig. 6: eine weitere Ausführungsform der Erfindung, bei der anstelle eines Dentalstiftes eine Hülse bzw. Kappe aus hochfester Keramik für ein Implantat verwendet wird.

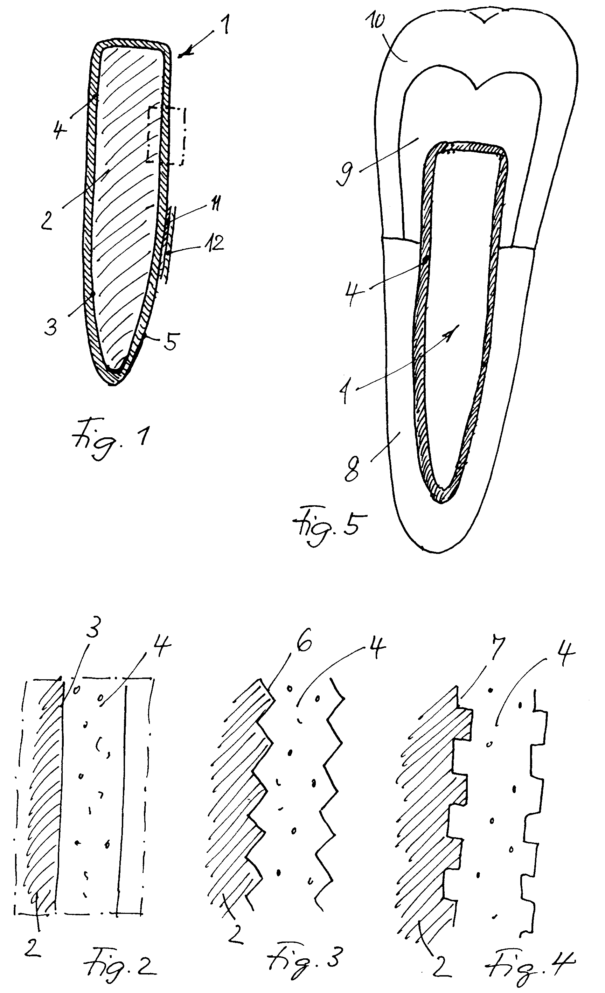

Der hochfeste Keramikstift 1 besteht aus einem etwa zylindrischen, wahlweise konischen oder stufenförmigen Schaft 2, der seinerseits eine glatte, gerauhte oder geformte Oberfläche 3 besitzt. Der Keramikstift 1 ist mit einer im wesentlichen homogenen Schicht 4 aus Keramik überzogen, die vorzugsweise den gesamten Keramikstift einschließlich des in Fig. 1 beispielsweise verjüngt dargestellten unteren Teil des Schaftes 2 umschließt. Die Außenseite 6 der Keramikschicht 4 ist z.B. durch Ätzen mit Flußsäure, durch mechanisches Aufrauhen, Sandstrahlen oder dgl. formbearbeitet, um die optimalen Voraussetzungen für einen chemischen und/oder mechanischen und/oder physikalisch-chemischen Verbund mit der Zahnhartsubstanz sowie dem Zahnaufbau zu erreichen.

In Fig. 2 ist ein Ausschnitt aus der Darstellung nach Fig. 1 (strichpunktiert dargestellter Ausschnitt) gezeigt. Der zylindrische Schaft 2 und die Keramikschicht 4 sind über eine weitgehend glatte bzw. ebene Fläche 3 miteinander verbunden. In Fig. 3 ist diese Übergangsfläche 6 zackenförmig ausgebildet, während in Fig. 4 diese Übergangsschicht 7 mäanderförmig ist.

Fig. 5 zeigt den Stift 1 in Verbindung mit einem zu restaurierenden Zahn. Der hochfeste Keramikstift 1 ist mit dem Dentalkeramik-Überzug 4 in die Zahnwurzel 8 eingesetzt. Der aus der Zahnwurzel 8 vorstehende Teil des Stiftes 1 ist z.B. mit einem wesentlich dickeren Überzug 9 der Keramikschicht versehen, so daß die Keramikschicht in Form eines Komposits oder Keramikaufbaues 9 als kopfförmige Erweiterung bzw. leicht präparierbarer Zahnstumpf ausgebildet ist, auf die eine Krone 10, die letztlich den Zahnaufbau darstellt, aufgesetzt ist.

Mit 11 ist in Fig. 1 eine auf den Keramiküberzug 4 aufgebrachte hydrolysestabile Haftvermittlerschicht, und mit 12 eine weitere Haftvermittlerschicht angedeutet.

## Patentansprüche

1. Dental-Retentionsstift aus hochfester Keramik, z.B. aus Zirkonoxid, für den Einsatz in eine Bohrung einer Zahnwurzel oder eines Zahnrestes bzw. eines zu restaurierenden Zahnes,
**dadurch gekennzeichnet**, daß der Stift einen Überzug aus fester, aber chemisch, und/oder physikalisch und/oder mechanisch leicht strukturierbarer Keramik aufweist.

2. Dental-Retentionselement in Form einer Hülse oder Kappe oder planes Element, z.B. Bracket, aus hochfester Keramik, z.B. aus Zirkonoxid, für die Verwendung in Verbindung mit einem Implantat, oder zum Aufkleben auf kieferorthopädisch zubehandelnde Zähne dadurch gekennzeichnet, daß die Hülse bzw. Kappe einen Überzug aus fester, aber chemisch und/oder physikalisch und/oder mechanisch leicht strukturierbarer Keramik aufweist.

3. Dental-Retentionselement nach Anspruch 1 oder 2, dadurch gekennzeichnet, daß der Überzug ein kontinuierlicher, diskontinuierlicher oder partieller, homogener oder inhomogener Überzug ist.

4. Dental-Retentionselement nach Anspruch 1, 2 oder 3, dadurch gekennzeichnet, daß der Keramiküberzug einen chemischen und/oder mechanischen und/oder physikalisch-chemischen Verbund mit der hochfesten Stift- bzw. Hülsen- bzw. Kappen-Oberfläche eingeht.

5. Dental-Retentionselement nach einem der Ansprüche 1 - 4, dadurch gekennzeichnet, daß der Keramiküberzug mehrschichtig aufgebaut ist und die verschiedenen Schichten verschiedenartige chemische und/oder mechanische und/oder physikalische Bearbeitungsqualitäten und/oder verschiedene chemische und/oder mechanische und/oder physikalisch-chemische Verbundqualitäten aufweisen oder aufweisen können.

6. Dental-Retentionselement nach einem der Ansprüche 1 - 5, dadurch gekennzeichnet, daß die Stiftoberfläche bzw. die Hülsenoberfläche chemisch und/oder physikalisch und/oder mechanisch so vorbehandelt ist, daß für nachfolgende Behandlungen eine erhöhte Benetzbarkeit und Oberflächenaktivität erzielt wird, beispielsweise durch Ätzen, mechanisches Aufrauhen, Ultraschall-Behandeln, Laserabtragverfahren, Aufsputtern hochreiner Keramikpartikel und dergl.

7. Dental-Retentionselement nach einem der Ansprüche 1 - 6, dadurch gekennzeichnet, daß der keramische Überzug für eine physikalische und/oder chemische Parametersteuerung, z.B. die Steuerung des (der) Elastizitätsmoduls(e), die Verbundfestigkeit(en), der (die) Wärmeausdehnungskoeffizient(en), die Dauerbelastung, usw. ausgelegt ist.

8. Dental-Retentionselement nach einem der Ansprüche 1 - 7, dadurch gekennzeichnet, daß die Schicht des keramischen Überzuges so aufgebaut ist, daß sie durch entsprechende Spannungsverteilung die Festigkeit und Belastbarkeit des hochfesten Keramikelementes als auch des restaurierenden Elementes, wie Zahn oder Zahnimplantat oder eines entsprechenden Aufbaues erhöht.

9. Dental-Retentionselement nach einem der Ansprüche 1 - 8, dadurch gekennzeichnet, daß der Keramiküberzug zusätzlich eine hydrolysestabile Haftvermittlerbeschichtung aufweist, die vollständig oder unvollständig und/oder in ein oder mehreren Schichten mit unterschiedlichen gleichmäßigen oder ungleichmäßigen Schichtstärken ausgebildet ist.

10. Dental-Retentionselement nach einem der Ansprüche 1 - 9, dadurch gekennzeichnet, daß die äußere Schicht lichtleitend ist und durch die Grenz- bzw. Oberfläche des inneren hochfesten Keramikelementes eine Verstärkung des Lichtaustritts aus der Oberfläche des Überzugs erzielt wird, die entsprechend farblich sowie mechanisch oder chemisch vorbehandelt sein kann.

11. Dental-Retentionsstift nach einem der Ansprüche 1 - 10, dadurch gekennzeichnet, daß im Stift eine Innenbohrung vorgesehen ist, die eine hohle Ausbildung des Stiftes ergibt, die den Stift und/oder Überzug in voller Länge durchdringen kann, und/oder vollständig oder unvollständig ausgebildet sein kann.

12. Dental-Retentionselement nach einem der Ansprüche 1 - 11, dadurch gekennzeichnet, daß die äußere aufgebrachte Keramikschicht so ausgebildet ist, daß sie in ihrer mechanischen und/oder chemischen Festigkeit durch Ultraschallanwendung entscheidend geschwächt wird, so daß der Stift mit und ohne Hilfsmittel und Hilfsverfahren leicht entfernt werden kann.

13. Dental-Retentionselement nach einem der Ansprüche 1 - 10, dadurch gekennzeichnet, daß zur Verbesserung des chemischen und/oder mechanischen und/oder physikalisch-chemischen Verbundes von hochfestem Keramikelement und dem chemisch und/oder mechanisch und/oder physikalisch-chemisch leicht strukturierbarem Keramiküberzug das hochfeste Keramikelement eine gezielte Verunreinigung oder Diskontinuität oder eine spezielle Formgebung der Oberfläche, wie z.B. Lakunen, Rillen oder Mikro- und Makrostrukturen, aufweist oder eine spezielle Formgebung der Oberfläche, einen verbesserten Verbund bzw. eine verbesserte Verankerung ergibt.

14. Dental-Retentionselement nach einem der Ansprüche 1 - 13, dadurch gekennzeichnet, daß der Keramiküberzug mehrschichtig aufgebaut ist, wobei nicht alle Schichten Keramikschichten sind, sondern z.B. als dazwischen gelagerte Komposit- und/oder Haftvermittlerschichten ausgebildet sein können, die ganz oder teilweise aufgebracht sind und/oder in unterschiedlichen Schichtstärken und/oder gleichmäßig oder ungleichmäßig der Parametersteuerung nach Anspruch 6, 7 oder 8 dienen.

15. Dental-Retentionselement nach einem der Ansprüche 1 - 14, dadurch gekennzeichnet, daß zur Aufnahme einer Krone der Stift, die Hülse oder Kappe einen Keramik- oder Kompositaufbau besitzt, der einer Zahnform gleichen kann und/oder eine Modellation der Weichgewebe ermöglichen kann und/oder in unterschiedlichen Farbgebungen ausgebildet sein kann.

16. Dental-Retentionselement nach einem der Ansprüche 1 - 15, dadurch gekennzeichnet, daß die Keramikschicht und/oder die unterschiedlich ausgebildeten Schichten nicht vollständig, sondern nur teilweise punkt-, ring-, band- oder strichförmig aufgebracht sind.

17. Dental-Retentionselement nach Anspruch 8, dadurch gekennzeichnet, daß auf die chemisch und/oder mechanisch unbehandelte oder behandelte Keramikschicht zusätzlich äußerlich eine hydrolysestabile Haftvermittlerschicht vollständig oder teilweise, punkt-, ring-, bandförmig oder dergl. in gleichmäßigen oder unterschiedlichen Schichtstärken aufgebracht ist.

18. Dental-Retentionselement nach Anspruch 17, dadurch gekennzeichnet, daß zusätzlich eine Kompositschicht aufgebracht ist, die chemisch und/oder mechanisch mit der Haftvermittlerschicht verbunden ist und die vollständig oder partiell chemisch und/oder durch Licht vorgehärtet oder vorvergütet ist.

19. Dental-Retentionselement nach einem der Ansprüche 1 - 18, dadurch gekennzeichnet, daß die aufgebrachte Keramikschicht aus mehreren Schichten besteht, die durch vollständige oder partielle punkt-, ring-, strich- oder dergl. - förmige unterschiedlich dicke Schichten gebildet ist, die gleichzeitig einer physikalisch-chemischen Parametersteuerung, wie Spannungsaufnahme, Verbundfestigkeit und dergl. dienen.

20. Dental-Retentionselement nach einem der Ansprüche 1 - 19, dadurch gekennzeichnet, daß der äußerste Überzug und/oder Zwischenschicht und/oder mehrere Schichten eine Metallschicht ist, die chemisch und/oder mechanisch und/oder physikalisch-chemisch mit der äußersten Schicht des Überzuges verbunden ist, und/oder aus einem edlen Metall, wie z.B. Platin und/oder Iridium und/oder aus einem Nicht-Edelmetall und/oder einer edlen und/oder unedlen Legierung bestehen kann, so daß dadurch über Anguß-Techniken und/oder Füge-Techniken und/oder andere Verbund-Technologien, ein mechanischer und/oder chemischer und/oder physikalisch-chemischer Verbund zu weiteren Aufbauelementen möglich ist.
